Europäisches Patentamt

European Patent Office

Office européen des brevets

(11) Publication number: **0 554 452 A1**

# EUROPEAN PATENT APPLICATION
## published in accordance with Art. 158(3) EPC

(21) Application number: 91914758.7

(22) Date of filing: 23.08.91

(86) International application number:
**PCT/JP91/01120**

(87) International publication number:
**WO 93/04564 (04.03.93 93/06)**

(51) Int. Cl.⁵: **H04Q 9/06, H04Q 9/14, H04Q 9/16**

(43) Date of publication of application:
**11.08.93 Bulletin 93/32**

(84) Designated Contracting States:
**DE GB**

(71) Applicant: **KOYO ELECTRONICS INDUSTRIES CO., LTD.**
**171, Tenjin-cho 1-chome**
**Kodaira-shi, Tokyo 187(JP)**

(72) Inventor: **TAKANO, Soichi**
**Koyo Electr. Ind. Co., Ltd. 171, Tenjincho 1-chome**
**Kodaira-shi Tokyo 187(JP)**
Inventor: **SHIMIZU, Nobuyuki**
**Koyo Electr. Ind. Co., Ltd. 171, Tenjincho 1-chome**
**Kodaira-shi Tokyo 187(JP)**

(74) Representative: **Gregory, Timothy Mark**
**Urquhart-Dykes & Lord Midsummer House**
**411C Midsummer Boulevard**
**Central Milton Keynes MK9 3BN (GB)**

(54) **METHOD AND SYSTEM FOR TRANSMITTING/RECEIVING DATA.**

(57) A method and system for transmitting/receiving data consisting of ON/OFF signals with two transmission lines. When a master station (10) receives data from a slave station, it sends out the L-level signal (e.g. 12 v) of the clock voltage in a position corresponding to the address of the slave station through a first constant-current circuit (22). The slave station (30) counts 24-v signals of the clock voltage to detect the address of its own. If the data for the slave station is "1", the slave station drives a second constant-current circuit (38) (current value of the first constant-current circuit < current value of the second constant-current circuit) parallely connected to the transmission line. Thus, the potential of the transmission line comes close to 0 v, which is inputted to the master station as input data. When the master station transmits data to the slave station, it sends out the L-level signal of 0 volt or second voltage in the position corresponding to the address of the slave station according to the transmission data. The slave station (50) outputs an ON or OFF signal according to the voltage of the L-level signal.

EP 0 554 452 A1

F I G. I

Technical Field

The present invention relates to a method of transmitting and receiving data consisting of on-state/off-state signals and apparatus therefor.

Background Art

Various methods have been proposed for the transmission and reception of data and, as for example, various methods of transmitting on-state/off-state signals of sensors or output units have also been proposed as extremely local communication methods. The system used in such case includes a central station corrected to a higher-rank apparatus and terminal stations comprising input units (sensors) or output units. As regards the connection methods and communication methods for such central station and terminal stations, the following three typical systems will now be described.

a) Daisy chain system

In this system, a plurality of terminal stations are successively connected in series with a central station and the last terminal station is connected to the central station. The addresses are for example designated successively as 0, 1, 2, ...starting from the closest terminal station as looked from the central station. The data transmitted from the central station are successively passed through the respective terminal stations so that when the data corresponding to its assigned address arrives, each of the terminal station recognizes it as the data for itself and processes the data. When the data are returned from the last terminal station, the central station determines that the data are transmitted through all the terminal stations or alternatively data are received from all the terminal stations, thereby transmitting the next data.

b) Shift register system

In this system, a plurality of terminal stations are successively connected in series with a central station and the last terminal stations is connected to a circuit for line matching purposes such as an open end or a terminating resistor. In this system, differing from the daisy chain system, the last terminal is not connected to the central station. The addresses are designated for examples as 0, 1, 2, ... in the order from the closest terminal station as looked from the central station. The central station transmits timing signals and data synchronized therewith to the terminal stations. When the timing signal corresponding to it is received, each of the terminal stations receives the data synchronized with the received timing signal or alternatively it transmits data in synchronism with the timing signal. When the transmission of the specified timing signals has been completed, the central station determined that the processing for all the terminal stations has been completed and the next timing signals and the synchronized data are transmitted to the terminal stations. The data transmission and reception method disclosed in Japanese Laid-Open Patent No. 64-89839 is based on this system.

c) Terminal station address system

In this system, a plurality of terminal stations are connected in parallel with a central station. Then, the addresses of the terminal stations are assigned arbitrarily within the scope that can be handled by the central station. In accordance with a predetermined communication procedure (a protocol), the cental station transmits the terminal station addresses and data so that when each of the terminal stations recognizes its own station, it processes the data or transmits the data of its own station to the central station.

The problems encountered in the above-mentioned data transmission and reception systems will now be studied.

In the case of the serial communication, if the width of every pulse is the same (assuming the ordinary parallel twisted pair line and the amount of data is also the same, there is the following relation in communication speed relative to one another

(Daisy chain system) = (shift register system) <<(terminal station address system)

Also, where any terminals station is added in between, it is necessary for "the daisy chain system" and "the shift register system" to reassign the addresses of all the following terminal stations and also the program of the higher-rank apparatus must be modified. Of course, "the terminal station address system" is

3

EP 0 554 452 A1

easy to add any terminals stations. In other words, it is only necessary to assign a new address and wire it.

On the other hand, with all of these systems, it has been impossible to effect a superposed transmission of the power supply to the terminal stations as well as the sensors, output devices, etc., connected to the terminal stations and data communication over the same line. In other words, basically the power supply and the data communication line are provided by separate lines in the terminal station address system. In the case of the daisy chain system" and "the shift register system", a timing line is required even if the superpose transmission of the power supply and data communication is effected over a single line. Further, in the case of "the terminal station address system", even if data signals are frequency modulated to effect the superposed transmission of the power supply and the data signals, the circuitry is complicated and moreover the fundamental harmonic of the frequency modulation becomes the maximum line pulse width, thereby decreasing the communication speed of data more and more.

Disclosure of invention

It is an object o the present invention to provide a method of transmitting and receiving data a system therefor possessing the high speed performance of the communication speed of the daisy chain system and the shift register system and the easiness of additional setting of terminal stations by the terminal station address system and further capable of effecting the transmission from a central station in such a manner that the power supply to a plurality of terminal stations as well as sensors, output devices, etc., connected to the former and data communication are effected through two transmission lines (the same line).

In accordance with one aspect the present invention, when effecting the transmission and reception of data between the central station and each terminals station, the central station sends through the two transmission lines a clock voltage composed of signals of an H level or a first voltage and signals of an L level or a second voltage or OV (the first voltage (e.g., 24 V) > the second voltage (e.g. 12 V)).

Also, when receiving data from each terminal station, the central station sends through a first constant current circuit an L-level signal or signals of the clock voltage at a position or positions corresponding to its address at the second voltage. The terminal station counts the H-level signals of the clock voltage sent through the transmission lines. Thus, when the resulting count corresponds to the address of its own station, in accordance with the data of the terminal station a second constant current circuit connected in parallel with the transmission lines (here, the constant current value of the first constant current circuit < the constant current value of the first constant current circuit) is driven.

At this time, if the data of the terminal station is "1", in accordance with the constant current value of the first constant current circuit< the constant current value of the second constant current circuit, the second constant current circuit is short-circuited and the potential across the transmission lines transmission lines drops to a stay close to OV. If the data of the terminals station is "0", the second constant current circuit is not drive and thus there is no change in the potential across the transmission lines.

The central station detects the then current potential across the transmission lines so that the detected potential is taken in as an input data from the terminal station of the then current address. It is grasped so that the data is considered as "1" when the potential across the transmission lines is OV and the data is considered as "0" when the potential is at the second voltage (12 V).

It is to be noted that the central station generates a voltage of a given width as a reference signal for the address signals of the terminals stations so that when this voltage is applied, each of the terminal stations reset the count for address detecting purposes.

Further, in accordance with another aspect of the present invention, when outputting data to each terminal station from the central station, the central station sends an L-level signal or signals of the clock voltage at a position or positions corresponding to the address of this terminal station in accordance with the transmitting data, that is, OV is sent when the data is "1" and the second voltage (12 V) is sent when the data is "0" through the two transmission lines.

The terminal station counts the H-level signals of the clock sent to it through the transmission lines so that when the count corresponds to the address of its own, it generates an on-state or off-state output in accordance with the voltage (OV or the second voltage) of L-level signals of the clock voltage.

It is to be noted that the L-level voltage may be reversed to the above-mentioned case so that as for example, the second voltage is sent when the data is "1" and OV is sent when the data is "0".

Still further, in accordance with still another aspect of the present invention the central station includes an output buffer whereby when receiving data from each terminal station an L-level signal or signals of the clock voltage at a position or positions corresponding to the address of this terminals station is sent at the second voltage through a first constant current circuit, and an input buffer for receiving the terminal voltage

4

of the two transmission lines as input data of the address.

Also, when transmitting data to each terminal station, the output buffer sends through the two transmission lines an L-level signal or signals of the clock voltage at a position or positions corresponding to the address of this terminal station at OV or the second voltage in accordance with the transmitting data.

Further, when initializing the address of each terminal station, the output buffer sends a voltage of a given time width so that when the voltage is received by the terminal station, it resets the counter adapted to direct its own address.

Further, in accordance with still another aspect of the present invention each terminal station input unit includes a smoothing circuit for rectifying through a directional element the clock voltage sent from the cental station through the two transmission lines and it is used as a power supply for driving the circui elements of the terminal station.

Also, the terminal station input unit includes a counter for counting an H-level signal or signals of the clock voltage sent from the central station through the two transmission lines, and an assigned address detecting circuit for detecting whether the count coincides with the predetermined address of the terminal station whereby when the address signal for the terminal station itself is detected, a detection signal is applied to an AND circuit. The AND circuit receives the assigned address detection signal and a sensor output to produce a logical product.

Further, the terminal station input unit includes a second constant current circuit having a current capacity greater than the current capacity of the L-level clock voltage for the address sent from the cental station through the transmission lines and connected in parallel with the transmission lines, and a switching element conneced in series with the second constant current circui which is subjected to on/off control in accordance with an output of the AND circuit.

For instance, when the assigned address is detected and at this time the sensor output is an on-state output, the switching element is turned on and the voltage across the transmission lines is applied to the second constant current circuit. However, the set current of the first constant current circuit in the central station is smaller than the set current of the second constant current circuit so that the second constant current circuit is short-circuited and the voltage across the transmissions lines decrease to a potential close to OV.

The central station receives the then current potential across the transmission lines through the input buffer so that as for example, when the potential across the transmission lines is OV, it is inputted as data "1", whereas when the potential remains at 12 V, it is inputted as data "0".

Further, in accordance with still another aspect of the present invention a terminal station output until includes, as in the case of the terminal station input unit, a smoothing circuit, a counter and an assigned address detecting circuit and it further includes an AND circuit for producing a logical product of the clock voltage across the transmission lines and an output of the assigned address detecting cercuit and a memory circuit for temporarily storing the output of the AND circuit to output it to a load. For instance, when the assigned address detecting circuit detects the assigned address, that is, when the L-level signal or signals are at OV, the load is turned on, whereas when the L-level signal or signals are at the second voltage, the load is turned off. In this case, this may be done in the reverse manner to the above-mentioned case and it may be designed so that the load is turned on when the L-level signals are at the second voltage and the load is turned off when the L-level signals are at OV.

Further, in accordance with still another aspect of the present invention each of the terminal station input unit and the terminal station output unit includes a reset circuit which sends a reset signal to the counter when the H-level of the clock voltage sent from the central station through the transmission lines is in excess of a given width. Then, it is inputted as a reference value for the clock voltage or the address signal sent cyclically from the central station so that the counters are reset and the addresses are sequentially incremented starting from the first one each time the following first voltage is applied.

Brief Description of Drawings

Fig. 1 is a block diagram showing the construction of a data transmission and reception system according to an embodiment of the present invention.

Fig. 2 is a circuit diagram of the output buffer in Fig. 1.

Figs. 3 and 4 are circuit diagrams showing the constructions of the exemplary constant current circuits.

Fig. 5 is a timing chart showing the operation of the system of Fig. 1.

Best Mode for Carrying Out the Invention

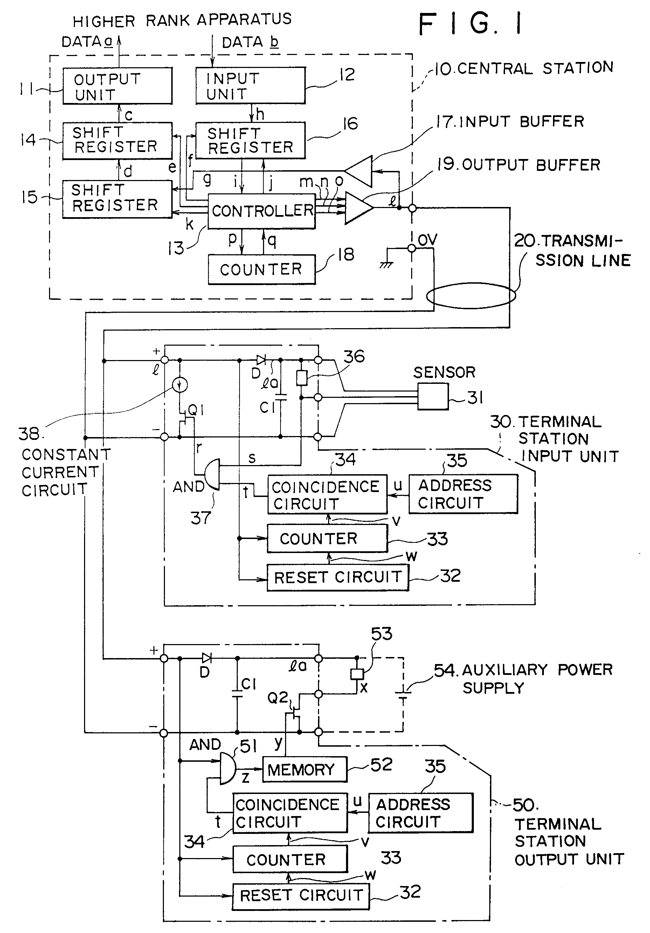

In the system shown in Fig. 1, a central station 10 is connected to terminal stations 30 and 50 through two transmission lines 10, and the terminal stations 30 and 50 are connected in parallel with the central station 10. Before explaining the details of the present embodiment, the outlines of the functions of the central station 10 and the terminal stations 30 and 50 will be respectively explained.

Basically, the central station 10 performs the following processing steps.

1) The power supply and data are superposed on a clock voltage and transmitted to every terminal station by driving the two transmission lines.

2) The data are superposed on the clock voltage

3) For example, when transmitting clocks and data "0", a voltage of 50% of the supply voltage is sent. When transmitting clocks and data "1", a voltage of OV of the power supply is transmitted.

4) A voltage of 100% of the supply voltage is transmitted in an amount corresponding to several clocks so as to reset the address managing counter of each terminal station.

5) The clocks following the transmission of the reset signal are counted to ensure the correspondence to the address of the terminal station.

On the other hand, each of the terminal stations 30 and 50 performs basically the following processing steps.

1) When the reset signal of a voltage representing 100% of the supply voltage is received in an amount corresponding to several clocks, the internal assigned address managing counter is rest and the clocks are counted.

2) When the count of the assigned address managing counter reaches the value of the assigned address count, it is determined that the address is its assigned one.

3) Where the terminal station is an input unit, clocks or "0" is transmitted as data when the address is the assigned one. Since the voltage of 50% of the supply voltage is applied, if, for example, the input to the input unit during the interval is active, OV is transmitted, whereas if it is no-active, there is no change in the situation (the voltage of 50% of the supply voltage). The cental station discriminates the response signal of the terminal station during the interval of the clocks so as to determine whether the input is active or non-active.

4) Where the terminal station is an output unit, in order to make its output active, the central station transmits a voltage of OV of the power supply during the interval of clocks and thus the output of the output unit becomes active. In order to make the output non-active, the central station transmits a voltage of 50% of the supply voltage during the interval of clocks and thus the output of the output unit becomes non-active.

The embodiment of Fig. 1 will now be described in greater detail.

The central station 10 includes an output unit 11 and an input unit 12 for transmitting and receiving data from a higher rank apparatus. Of course, only the output unit 11 or only the input unit 12 may be used or alternatively they may be of a serial communication system. A controller 13 is such that every terminal station has been set to serve as either an output unit or an input unit by suitable means. Assuming now that the number of terminal stations which can be connected are 32 points at the maximum, shift registers 14, 15 and 16 each has a storage capacity corresponding to 32 points.

Data a are the output data from the output unit 11 and its counts correspond to the contents of the shift register 14 and the respective bits correspond to the data of the respective terminal stations. The shift register 14 stores the contents of the shift register 15 at the timing of the application of a signal e from the controller 13. The shift register 15 successively stores on-state/off-state signals from an input buffer 17 at the timing of the application of signals k from the controller 13. Data b are data applied to the input unit 12 so that the shift register 16 stores the data at the timing of the application of a signal f from the controller 13 and also data i in the shift register 16 are sequentially taken into the controllers 13 at the timing of signals j.

When the timing signal or signals for one terminal station have been transmitted, the controller 13 sends a signal or signals p to a counter 18 so that the counter counts the signals and sends a signal q to the controller 13 when a predetermined value is reached. When the signal q is received, the controller 13 sends a reset signal for the terminal station and also the counter 18 is reset. The respective signals m, n and o from the controller 13 are signals for driving the output buffer 19.

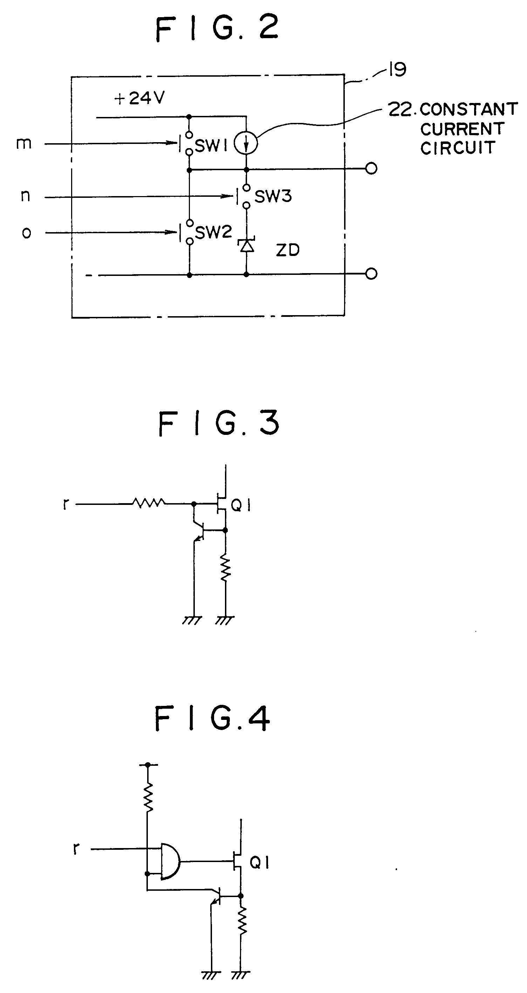

As shown in Fig. 2, the output buffer 19 is equivalently comprised of a constant current circuit 22, switches SW1, SW2 and SW3 each composed of a semiconductor device and a Zener diode ZD (the Zener voltage is 12 V).

When the output buffer 19 sends signals over the transmission lines 20, there are the following relations among the potentials, the signals m, n and o and the switches SW1, SW2 and SW3.

6

|  | m-----SW1 | | n-----SW2 | |
|---|---|---|---|---|
| 24-V transmission | ON | ON | OFF | OFF |
| 12-V transmission | OFF | OFF | OFF | OFF |
| 0-V  transmission | OFF | OFF | ON | ON |

|  | o-----SW3 | |
|---|---|---|
| 24-V transmission | OFF | OFF |
| 12-V transmission | ON | ON |
| 0-V  transmission | OFF | OFF |

The construction of the terminal station input unit 30 will now be described.

A voltage __ supplied through the transmission lines 20 has a complicate waveform as will be mentioned later and thus it is smoothed out by a diode D and a capacitor C1 to produce a stabilized DC voltage $\ell$a and thereby to ensure a DC circuit voltage. As a result, the smoothed DC voltage la serves as a driving power supply for a sensor 31 and a circuit lower supply for the terminal station 30. A reset circuit 32 is designed so that when the central station 10 effecs a 24-V transmission for resetting the terminal stations, its duration time is detected to determine whether it is in excess of a given time and,if so , a signal w or reset a counter 33 is sent to the counter 33. The counter 33 is reset by the signal w and it detects and counts negative-going transitions form 24 V across the transmission lines 20. The resulting count v is sent to a coincidence circuits 34. The address of the terminal station input unit 30 is set in an address circuit 35 which comprises for example a dip switch, ROM or RAM.

Its set value u is sent to the coincidence circuit 34. The coincidence circuit 34 compares the values of u and v so that when there is the equality, a coincidence signal t is sent to an AND circuit 37. During the time that the coincidence Signal t is being applied, if the sensor 31 sensor 31 (the same effect may also be obtained by a contact signal) is performing a detecting operation and a signal s generated through a load 36 goes to an H level, the AND circuit 37 sends a signal r for driving a transistor Q1.

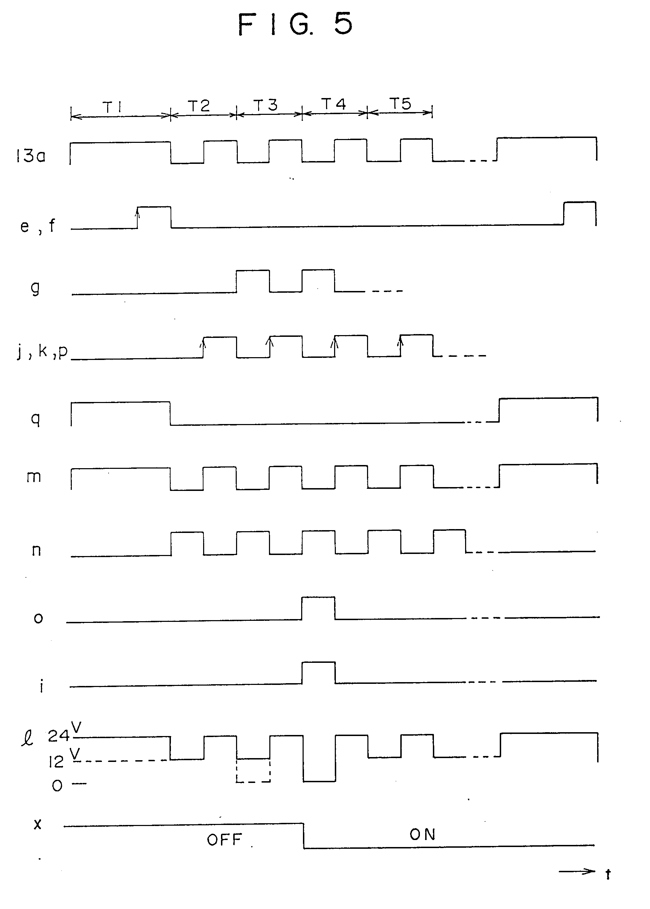

A constant current circuit 38 is connected in series with the transistor Q1. The constant current value of the constant current circuit 38 is set so that the constant current circuit 22< the constant current circuit 38. The constant current circuit 38 may be composed of a constant current circuit including the transistor Q1 as shown in Fig. 4 or 5.

Next, the construction of the terminal station output unit 50 will be explained.

The output unit 50 is basically the same with the input unit 30 excepting that the transistor Q1 and the constant current circuit 37 are not included and instead an AND circuit 51, a memory 52 and a transistor Q2 are included. As long as the coincidence signal t is applied, the AND circuit 51 sends information z on the transmission lines 20 to the memory 52. The memory 52 stores the contents of the information z and the stored contents are sent as a signal y to the transistor Q2. In response to the signal y, the transistor Q2 drives a load 53. An auxiliary power supply 54 is connected as an auxiliary power supply of the transmission lines 20 when the load 53 cannot be driven with the current capacity of the transmission lines 20.

The operation of the system of Fig. 1 will be described on the basis of the timing chart of Fig. 1.

1) T1: The controller 13 internally generates timing signals 13a and various operations are performed in accordance with the timing of the timing signals 13a. Firstly, the central station transmits 24V for a given time period so as to reset the terminal station counters 33. Also, depending on the circuit system, the same can also be effected by the transmission of 12V. At this time, the given time period is selected to be sufficiently longer than that time period (about 15 $\mu$S) which will be described later. Where the 24-V transmission is effected, the outputs of the controller 13 become as follows:

7

```
m -------SW1          n-------SW2          0--------SW3

   ON       ON        OFF      OFF         OFF        OFF
```

Simultaneously, the controller 13 sends a signal p to the counter 18 to reset it. The controller 13 sends a signal f so that the data of the input unit 12 is latched in the shift register 16.

On the other hand, when the transmission of 24 V from the central station lasts a given time period, this is detected by the reset circuit 32 of the terminal station input unit 30 and the counter 33 is reset. This operation is also performed similarly in the terminal station output unit 50.

2) T2: Next, if the No. 1 address to the terminal stations is an input unit, the central station 10 transits 12 V. When the transmission of 12 V is effected, the outputs of the controller 13 are as follows.

```
m-------SW1          n-------SW2          0-------SW3

  OFF      OFF        OFF      OFF         ON       ON
```

After the transmission of 12V has been performed for a given period of time (about 15 $\mu$S), it is changed to the transmission of 24V.

On the other hand, in each of the terminal station input unit 30 and the terminal station output unit 50 the counter 33 detects and counts the trailing edge of the 24 V. As a result, No.1 of the addresses is specified for this timing.

Then, at this time, if the terminal station input unit 30 is addressed as No.1, the coincidence circuit 34 generates a coincidence signal t. At this time, the coincidence signal t may have a time interval between the time of a trailing edge of 24 V and the time of a leading edge of 24 V. When a signal s from the sensor 31 is applied while the coincidence signal t is being applied, the AND circuit 37 drives the transistor Q1. However, if at this timing the sensor 3.1 has not been brought into detecting operation, the voltage waveform transmitted from the central station 10 is used as such.

In the central station 10, the input buffer 17 receives the transmitting 12V and the controller 13 sends a signal k to the shift register 15 which in turn stores a signal g from the input buffer 17. As a result, the fact that No.1 of the terminal station addresses is in a non-detecting state is stored in the No.1 address of the shift register 15.

Then, the controller 13 sends a signal p to the counter 18 so that the count of the counter 18 is increased by 1. Also, the controller 13 sends a signal j to the shift register 16 and the shift register 16 is shifted by an amount corresponding to one bit. Then, after a given time (about 15 $\mu$S), the controller 13 transmits 24 V.

(3) T3: Then, if No.2 of the terminal station addresses is an input unit, the controller 13 transmits 12 V.

On the other hand, in each of the terminal station input unit 30 and the terminal station output unit 50 the counter 33 detects and counts the trailing edge of 24 V. As a result, No.2 of the addresses is specified for this timing.

Then, at this time, if the terminal station input unit 30 is addressed as No. 2, coincidence circuit 34 generates a coincidence signal t. If the sensor 31 is in detecting operation, a signal s from the sensor 31 is applied to the AND circuit 37 while the coincidence signal t is applied and the transistor Q1 is driven. At this time, the transistor Q1 is turned on thus tending to flow a current through the transmission lines 20 up to the current value of the constant current circuit 38. Since the constant current value of the constant current circuit 22 is less than the constant current value of the constant current circuit 38 as mentioned previously, during the time interval where the transistor Q1 is turned on and the central station 10 transmits 12 V, the constant current circuit 38 tends to flow a current greater than the current value of the constant current circuit 22 and eventually the voltage $l$ across the transmission lines 20 drops to OV (a value close to OV).

In the central station 10, the terminal voltage of the transmission lines 20 becomes OV and therefore it is applied to the input buffer 17 by considering that OV or data "1" is transmitted from the terminal station. With the resulting waveform, the solid line portion is observed in the form of a broken line. Then, after a given time period (about 15 $\mu$S), the controller 13 transmits 24 V.

At this time, the controller 13 sends a signal k to the shift register 15 which in turn stores a signal g from the input buffer 17. The controller 13 sends a signal p to the counter 15 and thus the count of the counter 18 is increased by 1. As a resut, the fact that No. 2 of the terminal station addresses is in a detecting state is stored in the No.2 address of the shift register 15. The controller 13 sends a signal j to the shift register 16 so that the shift register 16 is shifted by amount corresponding to one bit.

After a given time period (about 15 $\mu$S), the controller 13 transmitts 24 V.

On the other hand, as soon as the central station 10 starts transmitting 24 V, the constant current circuit 22 of the output buffer 19 is short circuitted by the switch SW1 so that the constant current circuit 22 no longer functions and there is no currrent limitation. Thus, in the terminal station input unit 30 the currnt capacity of 24 V is now greater than the constant current value of the constant current circuit 38 and the voltage $\ell$ across the transmission lines 20 remains at 24V.

As described hereinabove, when the number of pulses corresponding to the address of its own is counted, the terminal station input unit 30 can transmit the ON/OFF state of the sensor 30 in the form of a waveform superposing the ON/OFF state on the clock voltage from the central station 10.

T4: Next, where No.3 of the addresses is an output unit and the output of the terminal station is to be switched on, the controller 13 of the central station 10 transmits OV. When effecting the transmission of OV, the outputs of the controller 13 become as follows.

```
    m-------SW1           n-------SW2           O-------SW3

    OFF     OFF           ON      ON            OFF     OFF
```

Then, after a given time period (about 15 $\mu$S), the controller 13 transmits 24 V.

At this time, the controller 13 sends a signal k to the shift register 15 which in turn stores a signal g from the input buffer 17. The controller 13 sends a signal p to the counter 18 and the count of the counter 18 is increased by 1. As a result, the fact that No.3 of the terminal station is in a detecting state is stored in the No.3 address of the shift register 15. In this case, although the terminal station is an output unit, the detecting state is stored in the No.3 address of the shift register 15 from the circuit construction point of view. Of course, this data does not cause any error if it is ignored when handling it. The controller 13 sends a signal j to the shift register 16 thus shifting the shift register 16 by an amount corresponding to one bit. Then, after a given time period (about 15 $\mu$S), the controller 13 transmits 4V.

On the other hand, if its address number is No.3 for the terminal station output unit 50, the coincidence circuit 34 produces a coincidence signal so that if the terminal voltage acrosss the transmission lines 20 is OV, this OV is stored in the memory 52 through the AND circuit 51. At this time, the voltage or OV across the transmission lines 20 is a signal for turning the load 53 on so that a drive signal y is sent to the transistor Q2 and the transistor Q2 is turned on, thereby driving the load 53.

(5) T5: Next, where No.4 of the addresses is an output unit and the output of the terminal station is to be turned off, the controller 13 transmits 12 V. When effecting the transmission of 12 V, the outputs of the controller 13 are as follows:

```
    m-------SW1           n-------SW2           O-------SW3

    OFF     OFF           OFF     OFF           ON      ON
```

Then, after a given period of time (about 15 $\mu$S), the controller 13 transmits 24V.

At this time, the controller 13 sends a signal k to the shift register 15 which in turn stores a signal g from the input buffer 17. As a result, the fact that No.4 of the terminal station addresses is in a non-detecting state is stored in the No.4 address of the shift register 15. In this case, while the terminal station is an output unit, a detecting state is stored in the No.3 address of the shift register 15 from the circuit construction point of view. The storage of this data has no detrimental effect as mentioned previously. The controller 13 sends a signal j to the shift register 16 and the shift register 16 is shifted by an amount corresponding to one bit. Then, after a given period of time (about 15 $\mu$S), the controller 13

transmits 24V.

On the other hand, if, for example, the address number of the terminal station output unit 50 is No. 4, the coincidence circuit 34 produces a coincidence signal so that if the voltage $\ell$ across the transmission lines 20 is 12V, it is stored in the memory 52 through the AND circuit 51. At this time, the 12-V voltage $\ell$ across the transmission lines 20 is a signal for turning the load 53 off so that no drive signal $y$ is sent to the transistor Q2 and the transistor Q2 is turned off. Thus, the load 53 is not driven.

As described hereinabove, while increasing the count of the counter 18 by 1 in response to a signal p at the timing of every leading edge of a signal 13a from its controller 13, the central station 10 stores detecting and non-detecting states in the shift register 15 and also shifts the shift register 16 correspondingly.

Also, when a number of pulses corresponding to its own address are counted, the load of each terminal station is subjected to ON/OFF control in accordance with the level of a transmitting signal from the central station.

From the foregoing description it will be seen that since a counter is provided on each terminal station side to effect an address management, the central station side is permitted to call all the terminal stations by sending pulses corresponding to the maximum one of the addresses of the terminal stations. Assuming now that a terminal station is connected at each of 32 junction points, if 15 $\mu$S for the transmission of 24 V and 15 $\mu$S for the transmission of data, that is, 30 $\mu$S are required for every terminal station, the required time can be reduced to 32 terminals x 30 $\mu$S + a time for resetting 24 V = about 1mS. If the same thing is to be performed by the terminal station address system, the required time becomes such that about 5 to 6 mS are required at the minimum. Also, since the address management is effected by each of the central station and the terminal stations, the addition and removal of any terminal station are easy as compared with the daisy chain system and the shift register system. In addition, the supply of power and the transfer of data can be effected by the use of two transmission lines and there is no need to use any control line, etc.

## Claims

1. A method of transmitting and receiving data characterizing in that:

a central station transmits through two transmission lines a clock voltage including an H-level consisting of a first voltage and an L-level consisting of a second voltage (where said first voltage > said second voltage) or OV whereby when receiving data from each of a plurality of terminal stations an L-level signal or signals of said clock voltage at a position or positions corresponding to an address of each said terminal station are transmitted at said second voltage through a first constant current circuit;

each of said terminal stations counts an H-level signal or signals of said clock voltage transmitted through said transmission lines whereby when the resulting count corresponds to an address thereof a second constant current circuit (where a constant current value of said first constant current circuit < a constant current value of said second constant current circuit) connected in parallel with said transmission lines is driven in accordance with data of each said terminal station;and

said central station receives a terminal voltage of said transmission lines as an input data of the address of each said terminal station.

2. A method of transmitting and receiving data characterized in that:

a central station transmits through two transmission lines a clock voltage including an H-level consisting of a first voltage and an L-level consisting of a second voltage (where said first voltage > said second voltage) or OV whereby when transmitting data to each of a plurality of terminals stations an level signal or signals of said clock voltage at a position or positions corresponding to an address of each said terminal station are transmitted at said OV or said second voltage in accordance with said transmitting data; and

each of said terminal stations counts an H-level signal or signals of said clock voltage transmitted through said transmission lines whereby when the resulting count corresponds to an address thereof an on-state or off-state output is generated in accordance with voltage of the L-level signals of said clock voltage.

3. A central station characterized by comprising:

An output buffer for transmitting through two transmission lines a clock voltage including an H-level consisting of a first voltage and an L-level consisting of a second voltage (where said first voltage > said second voltage) or OV whereby when receiving data from each of a plurality of terminal station an L-levels signal or signals of said clock voltage at a position or positions corresponding to an address of each said terminal station are transmitted at said second voltage through a first constant current circuit;

an input buffer for receiving a terminal voltage of said transmisison lines as an input data of the address of each said terminal station.

4. A central station as set forth in claim 3, wherein when transmitting data to each of said terminal stations, said output buffer transmits through said transmission lines an L-level signal or signals of said clock voltage at a position or positions corresponding to an address of each said terminal station at said OV or said second voltage in accordance with said transmitting data.

5. A central station as set forth in claim 4, wherein said output buffer transmits a voltage of a predetermined time width to reset the address of each said terminal station an initial state thereof.

6. A terminal station input unit comprising:

A smoothing circuit whereby a clock voltage transmitted from a central station through two transmission lines is rectified and converted to a power supply for said terminal station;

a counter for counting an H-level signal or signals of said clock voltage transmitted from said central station through said two transmission lines;

an assigned address signal detecting circuit for detecting whether a count of said counter coincides with a preliminarily assigned address of said terminal station;

an AND circuit for producing a logical product of an output of said assigned address detecting circuit and a sensor output;

a second constant current circuit having a current capacity greater than a current capacity of said L-level clock voltage corresponding to said assigned address and transmitted from said central station through said transmission lines, said second constant current circuit being connected in parallel with said transmission lines;and

a switching element connected in series with said second constant current circuit so as to be subjected to on-off control in accordance with an output of said AND circuit.

7. A terminal station input unit as set forth in claim 6, further comprising reset circuit for sending a reset signal when the voltage transmitted from said central station through said two transmission lines is in excess of predetermined width.

8. A terminal station output unit comprising:

a smoothing circuit whereby a clock voltage transmitted from a central station through two transmission lines is rectified through a directional element and converted to a power supply for said terminal station;

a counter for counting an H-level signal or signals of said clock voltage transmitted from said central station through said two transmission lines;

an assigned address detecting circuit for detecting whether a count of said counter coincides with a preliminarily assigned address of said terminal station;

an AND circuit for producing a logical product of said clock voltage from said transmission lines and an output of said assigned address detecting circuit; and

a memory circuit for temporarily storing the output of said AND circuit and outputting the same to a load.

9. A terminal station output unit as set forth in claim 8, further comprising a reset circuit for sending a reset signal to said counter when the voltage transmitted from said central station through said two transmission lines is in excess of a predetermined width.

F I G. 1

# FIG. 2

19

+24V

22. CONSTANT
CURRENT
CIRCUIT

m

SW1

n

SW3

o

SW2

ZD

# FIG. 3

r

Q1

# FIG. 4

r

Q1

# F I G. 5

# INTERNATIONAL SEARCH REPORT

International Application No PCT/JP91/01120

## I. CLASSIFICATION OF SUBJECT MATTER (if several classification symbols apply, indicate all) [6]

According to International Patent Classification (IPC) or to both National Classification and IPC

Int. Cl$^5$  H04Q9/06, 9/14, 9/16

## II. FIELDS SEARCHED

### Minimum Documentation Searched [7]

| Classification System | Classification Symbols |
|---|---|
| IPC | H04Q9/06, 9/14, 9/16 |

### Documentation Searched other than Minimum Documentation to the Extent that such Documents are Included in the Fields Searched [8]

| | |
|---|---|
| Jitsuyo Shinan Koho | 1965 – 1991 |
| Kokai Jitsuyo Shinan Koho | 1971 – 1991 |

## III. DOCUMENTS CONSIDERED TO BE RELEVANT [9]

| Category * | Citation of Document, [11] with indication, where appropriate, of the relevant passages [12] | Relevant to Claim No. [13] |
|---|---|---|
| A | JP, A, 54-141981 (Matsushita Electric Works, Ltd.), November 5, 1979 (05. 11. 79), (Family: none) | 1-9 |
| A | JP, A, 59-139781 (Matsushita Electric Works, Ltd.), August 10, 1984 (10. 08. 84), (Family: none) | 1-9 |
| A | JP, A, 1-296795 (Sanyo Electric Co., Ltd.), November 30, 1989 (30. 11. 89), (Family: none) | 1-9 |
| A | JP, A, 2-197715 (Mikuni Kogyo K.K.), August 6, 1990 (06. 08. 90), (Family: none) | 1-9 |

* Special categories of cited documents: [10]

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

## IV. CERTIFICATION

| Date of the Actual Completion of the International Search | Date of Mailing of this International Search Report |
|---|---|
| November 7, 1991 (07. 11. 91) | November 25, 1991 (25. 11. 91) |

| International Searching Authority | Signature of Authorized Officer |
|---|---|
| Japanese Patent Office | |

Form PCT/ISA/210 (second sheet) (January 1985)